# EUROPÄISCHE PATENTANMELDUNG

(11) **EP 3 744 178 A1**
(43) Veröffentlichungstag der Anmeldung: **02.12.2020**
(21) Anmeldenummer: 20176891.8
(22) Anmeldetag: 27.05.2020
(51) Int. Cl.: A01P 1/00, A01N 59/00, A01N 59/08

(54) **WÄSSRIGE NATRIUMHYPOCHLORITLÖSUNG UND VERFAHREN ZUR OBERFLÄCHENBEHANDLUNG**

(30) Priorität: 27.05.2019 DE 102019114088
(71) Anmelder: Romanowski, Jaroslaw, 65239 Hochheim (DE)
(72) Erfinder: Romanowski, Jaroslaw, 65239 Hochheim (DE); Theobald, Karsten, 66539 Neunkirchen (DE)
(74) Vertreter: Patentanwaltskanzlei Vièl & Wieske PartGmbB

(57) **Zusammenfassung**

Die vorliegende Erfindung betrifft ein Desinfektionsmittel in Gestalt einer wässrigen, Natriumhypochlorit enthaltenden Lösung, welche durch Natriumhydrogencarbonat, Natriumhydroxid und Natriumchlorid stabilisiert wird. Außerdem betrifft die Erfindung die Desinfektion von Oberflächen in einem zweistufigen Verfahren in Kombination mit einer probiotischen Lösung. Das Weitern betrifft die Erfindung die Verwendung des Verfahrens.

## Beschreibung

Die Erfindung betrifft eine wässrige Natriumhypochloritlösung und die Verwendung dieser Lösung für ein Verfahren zur Oberflächenbehandlung.

Wässrige Lösungen aus Natriumhypochlorit, die veraltet auch als "unterchlorige Säure" bezeichnet werden, kommen seit weit mehr als 100 Jahren als Biozide bzw. Desinfektionsmittel zum Einsatz. Speziell zur Wasserdesinfektion verwendete Natriumhypochloritlösungen werden landläufig auch "flüssiges Chlor" oder "Chlor Liquid" genannt.

Der wohl erste, der solche Lösungen anbot, war der Apotheker Antoine Germain Labarraque, der ab1822 in Javel, nahe Paris, Natrium- und Calciumhypochloritlösungen zu Desinfektionszwecken verkaufte. Daher ist für solche wässerigen Lösungen auch der Trivialname "Eau de Labarraque" oder "Eau de Javel" in Gebrauch.

Natriumhypochlorit bzw. das daraus freigesetzte Cl₂ ist ein starkes Oxidationsmittel, das direkt in die Zelle eindringt und dort die Erbinformationen beschädigt und dadurch die Zelle abtötet. Das Mittel ist für die Wasserdesinfektion zugelassen.

Das Natriumhypochlorit greift viele verschiedene Bestandteile der Zellen an. Dies erschwert eine Resistenzbildung der Krankheitserreger gegen den Wirkstoff und sorgt so für eine dauerhafte Wasserdesinfektion.

Um zuverlässig die gewünschte biozide Wirkung zu entfalten, müssen die zu dosierenden Mengen jedoch ausreichen, um den anwesenden Ammoniak (bzw. die Amine) über die Stufe des Monochloramins hinaus zu chlorieren. Erst dann ist eine ausreichende Desinfektion gewährleistet.

Natriumhypochloritlösungen sind als Desinfektionsmittel aus der DE 20 2018 102 846 U1 bekannt. Die Stabilisierung der Lösung erfolgt dort durch die Zugabe von Natriumcarbonat.

Der Erfindung liegt die Aufgabe zu Grunde, das Desinfizieren von Oberflächen zu optimieren.

Erfindungsgemäß wird dies mit einem Desinfektionsmittel in Form einer wässrigen Natriumhypochlorit-Lösung (NaOCl) in einer Konzentration von 0,0001 Gewichtsprozent bis 25 Gewichtsprozent dadurch erreicht, dass das Desinfektionsmittel zur Stabilisierung des Natriumhypochlorits zusätzlich Natriumhydrogencarbonat in einer Konzentration zwischen 0,0001 Gewichtsprozent und 0,5 Gewichtsprozent, Natriumhydroxid in einer Konzentration zwischen 0,0001 Gewichtsprozent und 0,5 Gewichtsprozent und Natriumchlorid in einer Konzentration zwischen 0,0001 Gewichtsprozent und 0,5 Gewichtsprozent enthält.

Dabei ist es zweckmäßig, dass nach Zugabe des Natriumhydrogencarbonats, des Natriumhydroxids und des Natriumchlorids der pH-Bereich der wässrigen Lösung zwischen pH7 und pH10 liegt und das Desinfektionsmittel einen Redoxwert von > 700mV besitzt. Das Desinfektionsmittel ist stabilisiert und damit auch in seiner desinfizierenden Wirkung optimiert.

Bevorzugt ist eine Konzentration von 0,01 bis 0,2 Gewichtsprozent Natriumhypochlorit in der wässrigen Lösung. Besonders bevorzugt ist eine Konzentration von 0,05 bis 0,08 Gewichtsprozent Natriumhypochlorit in der wässrigen Lösung.

Diese Natriumhypochloritlösung ist gekennzeichnet durch eine besondere Zusammensetzung, die einer speziellen Stabilisierung geschuldet ist. Ein möglicher Wirkungsspielraum bewegt sich zwischen 1 - 5000 mg/l, wobei das StandardVerfahren mit einer 0,06%igen NaOCl-Lösung durchgeführt wird.

Vorteilhaft liegt diese Natriumhypochloritlösung unterhalb der Gefahrstoff-Grenze, ist nicht brennbar, kein Gefahrgut und hautverträglich.

Eine Ausführung des Desinfektionsmittels besteht darin, dass die wässrige Lösung zur Stabilisierung des Natriumhypochlorits zusätzlich Natriumhydrogencarbonat in einer Konzentration zwischen 0,001 Gewichtsprozent und 0,4 Gewichtsprozent, Natriumhydroxid in einer Konzentration zwischen 0,001 Gewichtsprozent und 0,4 Gewichtsprozent und Natriumchlorid in einer Konzentration zwischen 0,001 Gewichtsprozent und 0,4 Gewichtsprozent enthält.

Besonders vorteilhaft ist eine Konzentration von 0,06 Gewichtsprozent Natriumhypochlorit in der Lösung. Diese Konzentration bildet die Grundlage für die im folgenden genannten Verdünnungsverhältnisse.

Vorteilhaft wird damit der Wirkungsmechanismus unterstützt, bei dem das im >pH7 eingebettete NaOCI mit der Organik/Zellmembran der Keime derart abreagiert, dass Elektronen aus der Zellmembran entfernt werden und der Mikroorganismus kollabiert. Bei diesem Abreaktionsprozess reduziert sich NaOCl zu Hypochloriger Säure (HOCI), welche die noch verbleibende Organik des Keims zersetzt. Aufgrund der niedrigen Konzentration und der speziellen Kombination aus Redoxwert >700mV und basischem pH-Wert, findet eine Zersetzung bei komplexen Organstrukturen, wie sie Mehrzeller aufweisen, nicht statt. Besonders vorteilhaft wird in einem basischen Gemisch die Bildung von Chlorgas verhindert.

Es handelt sich um ein Desinfektionsgemisch, welches dem körpereigenen Immunsystem nachempfunden wurde, bei dem es die neutrophilen Granulozyten sind, welche im Abwehrsystem des Säugetiers auch NaOCl zur Reduktion pathogener Keime "einsetzen".

Eine weitere Verwendung der Natriumhypoochloritlösung besteht in der Zerstörung einzelliger Organismen. Zu diesen einzelligen Organismen gehören beispielsweise Bakterien, Viren, Pilze und Sporen.

Diese spezielle NaOCl-Mixtur ist in der Lage, Bakterien, Viren, Pilze und Sporen zu eliminieren. Insbesondere kann das Desinfektionsmittel die in der Tierzucht sehr problematischen Viren H1N1 bis hin zum Afrikanischen-Schweinepest-Virus (ASF-Virus) und dem Coronavirus auf Oberflächen von Körpern, Gegenständen und Raum-Wänden/Böden um viele LOG-Stufen reduzieren. Dies zeichnet das Desinfektionsmittel besonders aus und empfiehlt es zum schnellstmöglichen Einsatz zur Bekämpfung der sich weltweit ausbreitenden Seuchen. Außerdem ist das Desinfektionsmittel in der Lage, Schimmelpilze und deren Sporen zu bekämpfen und deren Präsenz um mehrere LOG-Stufen zu reduzieren, was vor allem in stark frequentierten Räumen mit relativ hohem Feuchtigkeitsgrad von großem Nutzen ist.

Hierbei ist es vorteilhaft, dass die einzelligen Organismen ASF-Viren oder Coronaviren sind.

Die Wirksamkeit ist nach wenigen Sekunden gegeben und erreicht bereits nach 10 Minuten ihr Maximum. Das Wirkungsspektrum reicht von Verdünnungen 1:1 - 1:200.

Die Bekämpfung der ASF-Viren erfolgt in mehreren Bereichen im landwirtschaftlichen und forstwirtschaftlichen Umfeld. Auch Jäger / Förster sind sehr stark von den resultierenden Restriktionen betroffen, welche durch die von Wildschweinen (aber auch evtl. Jagdhunden und anderen Tieren) übertragene ASF-Seuche veranlasst wurden. Die besonders hohe Wirksamkeit des Desinfektionsmittels im Einsatz gegen ASF-Viren ist auch in der Stabilisierung durch NaOH, NaCl und NaHCO₃ begründet.

Dabei ist es vorteilhaft, dass das Desinfektionsmittel in Schleusen aufgebracht wird. Ein Verwendungsbeispiel des Desinfektionsmittels besteht in dessen Anwendung in Personen-Schleusen. Diese können vorteilhaft für Mitarbeiter im landwirtschaftlichen Betrieb oder im Schweinemastbetrieb verwendet werden.

Hierbei sind vor den Mitarbeiter-Räumen eines betroffenen landwirtschaftlichen Betriebs mannshohe zeltartige Kabinen aufgestellt, welche dem Dekontaminieren von Mitarbeitern und deren Bekleidung dienen. Die Mitarbeiter erhalten vor der Arbeit im sensiblen Bereich des Betriebs eine Schutzausrüstung, die über die normale Bekleidung gezogen werden kann. Diese Schutzausrüstung umfasst abschließende Handschuhe, Überschuhe, Überhose, Überjacke oder Über-Overall mit abschließender Kapuze mit Freiraum für eine entsprechende Atemmaske. Ist diese Schutzausrüstung angelegt, wird die Personen-Schleuse betreten und die Schutzausrüstung tragende Person mit einem vernetzend sprühenden Verneblungsgerät und einer Desinfektionsmittellösung im Verhältnis 1:1 - 1:200 für einen Zeitraum von mindestens 30 Sekunden besprüht, während sich die Füße mit den Überschuhen in einer Wanne befinden, die ebenfalls Desinfektionsmittellösung im Verhältnis 1:1 - 1:200 enthält. Erst nach dieser Personen-Desinfektion wird der sensible Bereich betreten.

Nach der Arbeit im sensiblen Bereich wird die gleiche Prozedur vollzogen, wobei nach Abschluss der Desinfektion die gesamte Über-Bekleidung ausgezogen und in einem Desinfektionsmittel-enthaltenden Behälter gegeben wird, um eine Verschleppung zu verhindern.

Für Arbeiter im Forstbereich / Jäger, welche in gefährdeten Gebieten tätig sind, ist eine entsprechende desinfizierende Handhabung ebenfalls wichtig.

Nach dem erfindungsgemäßen Verfahren wird die Natriumhypochloritlösung (NaOCl) in einer ersten Stufe durch Fluten, Auftragen, Versprühen oder Vernebeln auf Oberflächen aufgebracht, bzw. durch Versprühen/Verneblung in die Raumluft eingebracht, um dort über bis zu 10 Minuten einzuwirken. Diese Maßnahme dient der Reduktion von Keimen auf Oberflächen und in der Raumluft. Bei den Oberflächen kann es sich um Holz, Stein, Metall, Kunststoff oder Haut handeln. Als besonderer Nebeneffekt wird eine vollständige Geruchsreduktion im Raum, bzw. auf der Oberfläche erzielt.

Hierbei ist es wichtig zu beachten, dass die in einer ersten Stufe eingesetzte NaOCl-Lösung vollständig abreagiert ist, bevor einer zweiten Stufe stattfindet. Ein Kriterium hierfür ist in diesem Zusammenhang der Grad der Feuchtigkeit im Kontext der Vorbehandlung der ersten Stufe. Die zweite Stufe kann erfolgen, sobald die Oberfläche vollständig abgetrocknet ist und/oder wenn ein Zeitraum von 10-60 Minuten nach der ersten Stufe vergangen ist.

Weiterhin besteht das Verfahren darin, dass in einer zweiten Stufe ein Mikroorganismus zum nachhaltigen probiotischen Besetzten der zu behandelten Oberflächen auf die zu behandelten Oberflächen aufgetragen wird.

Vorteilhaft wird dadurch die Ausbreitung eines anderen Mikroorganismus auf der Oberfläche gehemmt.

Dabei ist es zweckmäßig, dass dieser Mikroorganismus der Bacillus subtilis ist. Dieser ist ein typischerweise auf der Haut des Menschen, im Erdreich und anderen Oberflächen angesiedelter Mikroorganismus, der eine Oberfläche nachhaltig besetzen kann. Es konnte mit Hilfe des Schimmelpilzes Aspergillus brasiliensis nachgewiesen werden, dass die in der zweiten Stufe eingesetzten Bacillus subtilis - Sporen eine Oberfläche vollständig einnehmen und nachhaltig besetzten können. Für Säugetiere stellt der Bacillus subtilis keine Gefahr dar, ganz im Gegenteil trägt dieses Probiotikum besonders zur Schaffung gesunder Lebensräume bei. In früheren Zeiten wurde der Bacillus subtilis sogar oral verabreicht, um bestimmte Verdauungserkrankungen und Infektionen zu bekämpfen. In der Pflanzenzucht wird Bacillus subtilis traditionell genutzt, um den Ertrag zu steigern, indem Bacillus subtilis im Erdreich angereichert wird und dort den Raum einnimmt, der alsdann schädlichen Mikroorganismen nicht mehr zur Verfügung steht.

Im Folgenden werden Verwendungsbeispiele für die Verwendung des Verfahrens mit dem Desinfektionsmittel beschrieben.

Ein mögliches Anwendungsgebiet des Verfahrens ist die Landwirtschaft mit der Viehzucht im Stall, beispielsweise bei Kühen, Schweinen, Schafen oder Geflügel oder Tiertransport und die Haustierzucht, beispielsweise in Inhalationskammern, Tierboxen, Transporthängern und Zwingern. In Stufe 1 erfolgt zunächst eine Grundreinigung der Oberflächen mit einem speziellen Niederdruck Dampfstrahler, der das Desinfektionsmittel auf die Tröge, Decken-, Wand- und Bodenflächen so aufbringt, dass keimbelasteter Schmutz abgetragen, desinfiziert und gezielt in die Abfluss-Schächte geleitet wird. Die Reihenfolge ist dabei vorzugsweise mit der Reinigung und Desinfektion bei den Decken anzufangen und nach den Seitenwänden schließlich die Böden zu reinigen. Das Desinfektionsmittel wird dabei im Verhältnis 1:100 mit Wasser verdünnt. Danach erfolgt eine Sprüh-Vernebelung mit einem Gerät, welches Tropfengrößen > 1µ und einen dichten Nebel im gesamten Raumvolumen erzeugt. Die Verdünnung beträgt hierbei 1:100 oder dem Bedarf entsprechend an die Keimbelastung angepasst 1:10, 1:50, 1:150 oder 1:200. Bei akuter Seuchengefahr werden nach der Verneblung alle Oberflächen gezielt mit dem Desinfektionsmittel in entsprechend höherer Konzentration im Niederdruck-Verfahren desinfiziert. Zur Kontrolle erfolgt kann eine Probenahme an sensiblen Stellen erfolgen, um den Nachweis der notwendigen Keimreduktion erbringen zu können. Hierzu können Abklatschproben, Schnelltests und Luftkeimmessungen verwendet werden. Bei nicht ausreichender Keimreduktion können die Maßnahmen wiederholt werden, wahlweise mit stärkeren Konzentrationen, bis die notwendige Keimreduktion erreicht ist. Nach der zuletzt behandelten Oberfläche sollte mindestens 10 Minuten gewartet werden, bis die zweite Stufe eingeleitet wird. Je trockener die Oberfläche ist, desto besser kann die zweite Stufe zur Wirkung kommen.

Die zweite Stufe beinhaltet das Aufbringen der Bacillus subtilis-Lösung mit Hilfe eines Niederdruck-Sprühgerätes, Pinseln und/oder anderen geeigneten Werkzeugen zum Auftragen von Flüssigkeiten auf die Raumoberflächen im Stall. Die zur Imprägnierung der Oberflächen verwendete Bacillus subtilis-Lösung wird je nach Stall-Situation und Stall-Bereich in einem Konzentrationsfenster von 10¹ bis 10¹² eingesetzt. Zur Überprüfung der Imprägnierungs-Potenz wird von der zu überprüfenden Oberfläche eine Probe genommen. Im Labor wird getestet, ob diese Probe ein Wachstum von Aspergillus brasiliensis zulässt. Wenn ein Wachstum von Aspergillus brasiliensis auf der mit Bacillus subtilis imprägnierten Probe möglich ist, muss die Imprägnierung erneuert werden. Spätestens nach 6 Monaten sollte nach der 2-Stufen-Oberflächen-Behandlung eine Überprüfung der Imprägnierungs-Potenz vorgenommen werden.

Stallungen, die von der ASF-Seuche bedroht sind, haben am zentralen Zufahrtsweg eine oder mehrere KFZ-Schleuse/n, die eine ASF-Verschleppung verhindern. Dabei erfolgt die Zufahrt und die Ausfahrt aller KFZ durch eine Schleuse. Die Mitarbeiter durchlaufen eine Personen-Schleuse vor dem Betreten der Stallungen. Dabei erfolgt der Zugang und der Ausgang durch eine Schleuse. Die Tiere durchlaufen eine TierSchleuse beim Einbringen in die Stallung und vor der Verladung für den Transport aus der Stall-Anlage. Im Stall wird die Berieselungsanlage für Klima-Modulation so umfunktioniert, dass nach der Filteranlage eine Eindosierung mit DesinfektionsmittelLösung 0,06% über eine Dosierpumpe erfolgen kann. Ein bis mehrmals wöchentlich werden die Tiere mit Desinfektionsmittellösung mit einer Dosierung von 1:1 bis 1:200 berieselt oder falls eine solche Klima-Berieselungs-Anlage nicht vorhanden ist, wird über einen Vernebier/Versprüher im Stall ein bis mehrmals wöchentlich mit Desinfektionsmittellösung eine Verneblung/Versprühung vorgenommen, wobei die Luftfeuchtigkeit um mindestens 5% erhöht wird und ein stehender Nebel augenscheinlich wahrgenommen werden kann.

Ein weiteres mögliches Anwendungsgebiet des Verfahrens liegt in der Industrie, beispielsweise bei der Desinfektion von Werkstücken. In der ersten Stufe erfolgt nach Materialtest das Desinfizieren der Werkstücke, beispielsweise Coils, Textilballen, Metallbleche oder Formstücke, durch Besprühen, Abwaschen oder Tauchbehandlung mit dem Desinfektionsmittel in entsprechender Verdünnung entweder pur oder zwischen einer Verdünnung von 1:1 und 1:200. Nach der Desinfektion mit dem Desinfektionsmittel wird das Werkstück getrocknet.

Das trockene Werkstück wird mit Bacillus subtilis - Lösung durch Tauchbad, Bestreichen oder vernetztes Besprühen in entsprechender Konzentration zwischen 10¹ und 10¹² KbE imprägniert. Anschließend wird das Werkstück trocknen gelassen und im weiteren industriellen Prozess gehandhabt.

Ein weiteres Anwendungsgebiet des Verfahrens liegt in der Medizin, beispielsweise bei dem Einrichten von antipathogenen Zonen im Krankenhaus, in Arztpraxen, bei Therapeuten, in Ambulanzen oder in Ambulanzwagen. In der ersten Stufe erfolgt die Installation von Handdesinfektions-Spendern mit dem unverdünnten Desinfektionsmittel vor allem im Eingangsbereich, in Stationen und in allen relevanten Zimmern. Des Weiteren erfolgt die keimreduzierende Reinigung mit der Desinfektionsmittellösung im Verdünnungsverhältnis 1:10 - 1:200 in der Standard-Unterhaltsreinigung auf allen relevanten Stationen und in allen Krankenzimmern. Die Desinfektion mit Desinfektionsmittellösung wird im OP-Bereich auf Oberflächen, auf OP-Besteck und durch Verneblung/Versprühung in der OP-Raumluft ausgeführt. Desinfizierende Wundreinigung ist mit 0,01-0,1 %igen Desinfektionsmittellösung möglich.

In der zweiten Stufe wird probiotische Lösung zwischen 10¹ -10¹² KbE vor und im Eingangsbereich der Kliniken auf Böden, Wänden und Decken zur probiotischen Imprägnierung aufgesprüht, so dass pathogene Keime dort keinen Raum einnehmen können. Hierbei breiten sich die Bacillus subtilis-Bakterien auf der Oberfläche aus und siedeln sich dort in Sporenform/teilweise Vitalform an, so dass dieser Raum vollständig besetzt ist. Andere Keime können sich dort nicht ansiedeln, weil der Raum schon belegt ist. Auf Oberflächen in Duschen und Toiletten kann die probiotische Lösung (10¹ - 10¹² KbE) regelmäßig aufgetragen werden, insbesondere die Fugen sind sorgfältig zu behandeln. Die probiotische Lösung wird mindestens einmal wöchentlich in Abflüsse und Abläufe gegeben. Die Konzentrationen liegen hierbei zwischen 10⁶ und 10¹² KbE. Die Unterhaltsreinigung im Eingangsbereich wird mit Bodenreinigern, die 10¹ - 10¹² der probiotischen Lösung enthalten, ausgeführt. Die probiotische Lösung kann hierzu als Additiv in nicht biozide Reinigungsmittel gegeben werden, die standardmäßig in der Unterhaltsreinigung genutzt werden.

Im Krankenhaus-Kontext können drei Zonen im 2-Stufen-Verfahren eingerichtet werden. Die Zonen sind eine Zone 1 bestehend aus Eingangsbereich, Empfangsbereich, Fahrstuhlbereich und sonstigen öffentlich zugänglichen und permanent frequentierten Räumen und Gängen inklusive der Besuchertoiletten, einer Zone 2 bestehend aus Patientenzimmern und Patiententoiletten und einer Zone 3 mit Operations- und Behandlungsräumen. Dabei wird das zweistufige Verfahren in den jeweiligen Zonen wie folgt umgesetzt. In Zone 1 erfolgt die Händedesinfektion nach Stufe 1, sowie die Unterhaltsreinigung nach Stufe 2. Besuchertoiletten werden nach Stufe 2 behandelt. In Zone 2 erfolgt die Händedesinfektion mit Stufe 1, ebenso wie die Unterhaltsreinigung im Patientenzimmer.

Dabei erfolgt die Oberflächenbehandlung der Wände und Decken einmal jährlich mit Stufe 2. Zudem werden Fliesen, Fugen und andere Oberflächen auf Patiententoiletten mit Stufe 2 behandelt. In Zone 3 werden alle Desinfektionen und Unterhaltsreinigungen nach Stufe 1 in entsprechenden Konzentrationen durchgeführt.

Ein weiteres Anwendungsgebiet des Verfahrens sind öffentliche Einrichtungen, beispielsweise Schulen, Kindergärten, Universitäten, Bibliotheken, Rathäuser und Bürgerhäuser. Nach Stufe 1 erfolgt die Installation von Handhygiene-Spendern mit unverdünnter 0,06%iger Desinfektionsmittellösung im Eingangsbereich der Einrichtung. Die Unterhaltsreinigung in Gemeinschaftsräumen kann mit Desinfektionsmittel in Verdünnungen von 1:100 - 1:200 durchgeführt werden. Handläufe und Türklinken werden täglich mit unverdünnter 0,06%iger Desinfektionsmittellösung desinfiziert. Einmal wöchentlich erfolgt die Vernebelung mit Desinfektionsmittel in Verdünnungen 1:10 - 1:200 in Klassen- und Gemeinschaftsräumen in Infektionszeiten zur Reduktion der Krankenstände, beispielsweise von Oktober bis Dezember.

In Stufe 2 erfolgt die Unterhaltsreinigung im Eingangsbereich durch Zugabe von Bacillus subtilis Lösung in Putzwasser. Die Putzwasserlösung hat dabei >10⁴ KbE Bacillus subtilis. Die Oberflächen in Toiletten der Einrichtung werden mit Bacillus subtilis imprägniert. Dies wird durch Aufsprühen, Einreiben oder anderes Auftragen erreicht. Insbesondere werden die Oberflächen wie Decken, Wände und Fliesen vernetzt besprüht oder abgerieben.

Ein weiteres Anwendungsgebiet des Verfahrens sind Sporteinrichtungen, beispielsweise Sportvereine, Fitness-Studios und Trainingseinrichtungen. In Stufe 1 erfolgt das Desinfizieren und die Geruchsbeseitigung in Duschräumen, Umkleiden, Kleider-Spinds und Toiletten durch Versprühen/Vernebelung in Räumen und auf Oberflächen der Einrichtung mit Desinfektionsmittel in Verdünnungen 1:10 - 1:200.

Des Weiteren erfolgt die Beseitigung von Gerüchen und gleichzeitige Desinfektion von Sportgeräten wie Matten, Bällen, Hantelstangen, Griff-Stücken, Sportschuhen, Sportausrüstung wie Schienbeinschonern, Tiefschutz und Protektoren.

In Stufe 2 wird die Bacillus subtilis Lösung in das Putzwasser zur Herstellung einer Putzwasserlösung mit > 10¹ KbE zugegeben. Die Oberflächen in Duschen und Umkleiden, insbesondere der Fugen und Wand- und Deckeneckpunkte, werden mit >10¹ KbE-Lösung von Bacillus subtilis imprägniert.

Ein weiteres Anwendungsgebiet des Verfahrens sind Saunen und Wellness-Anlagen. Hierbei erfolgt in Stufe 1 das Desinfizieren und die Geruchsbeseitigung mit Desinfektionsmittellösung unverdünnt bis zu Verdünnungen 1:200 auf Liegeflächen, Sitzflächen, Massagebalken und Stehflächen durch Versprühen und/oder Oberflächenflutung, Abwaschen und anderen Aufbringungsvarianten. Die Böden und Wände von Duschbereichen werden mit unverdünnter oder im Verhältnis 1:200 verdünnter Desinfektionsmittellösung desinfiziert. Die Desinfektion von Tauchbecken erfolgt durch Zugabe unverdünnter Desinfektionsmittellösung bis zum Erreichen des entsprechenden Grenzwertes, wobei dieser regelmäßig überprüft wird.

In Stufe zwei werden die Fugen mit einer Bacillus subtilis Lösung mit >10¹ KbE imprägniert. Des Weiteren wird Bacillus subtilis Lösung in das Putzwasser zum Putzen der Laufwege in Saunen und Wellness-Anlagen zugegeben. Im Außenbereich erfolgt die Anwendung der Stufe 2 überall dort, wo gestanden und gegangen wird.

Ein weiteres Anwendungsgebiet des Verfahrens ist die Fassadenaufbereitung, insbesondere auch die Behandlung von Böden, Dächern und Denkmälern. Es dient zur nachhaltigen Fassadenbehandlung, Fassadenaufbereitung, Behandlung von Böden, Innenwänden und Dächern.

Ziel der mehrstufigen Oberflächenaufbereitung mit NaOCl und Probiotika ist es, die ursprüngliche Farbqualität (der Fassade, des Bodens, der Innenwand, des Dachs) wieder zum Vorschein zu bringen, ohne dabei das Gebäude und Bewohner mit langwierigen Arbeiten zu belasten (Gerüstaufbau, Gerüst-Verankerung in Fassade, Abkleben, Hochdruckreinigen, Grundieren, Anstrich usw. mit Gesamt-Zeitaufwand ca. 2-3 Wochen für 300 qm Fassade und oft Schäden an Garten).

Durch das Verfahren wird die Fassade (der Boden, die Innenwand, das Dach) sehr schonend aufbereitet und die Farbbrillanz des Putzes oder des ursprünglichen Anstrichs wieder zum Vorschein gebracht. Der Zeitaufwand für 300 qm Fassade beträgt hierbei ca. 8-16 Arbeitsstunden. Ein Einfamilienhaus ist mit diesem nachhaltigen Verfahren in 1-2 Werktagen komplett aufbereitet.

Durch den Einsatz der stabilisierten Wirkstoffkomplexe in diesem Verfahren wird die Verankerungsfähigkeit der Alge und des Pilzes im Putz gelöst, die Alge und der Pilz stirbt sofort ab, ebenso deren Sporen.

Durch den Einsatz der probiotischen Bakterien-Lösung in diesem Verfahren wird der gesamte Putz durch sporulierende Bakterien besetzt, welche als Platzhalter ganz natürlich den gesamten Poren- / Oberflächenraum einnehmen. Eine Ansiedlung für Algen und Pilze auf einem so besetzten Putz und/oder anderen Oberflächen ist nicht möglich, solange dieser Raum von Bakterien und deren Sporen nachhaltig besetzt ist.

Das Aufbringen der beiden Stufen erfolgt im Niederdruckverfahren mit Stand-der-Technik-Gerätschaften, welche normalerweise auch als Hochdruckreiniger eingesetzt werden, jedoch im Druck stark gedrosselt sind. Es werden sowohl Lanzen mit Spezial-Düsen, als auch Hand-Druck-Versprüher eingesetzt, die ein schonendes Behandeln der Fassadenoberfläche ermöglichen. Durch den Einsatz der stabilisierten Desinfektionsmittellösung kommt ein naturidentisches Desinfektionsmittel auf Basis von Natriumhypochlorit zur Wirkung, welches biologisch abgebaut wird und die Umweltbelastung minimiert. Das in dem Desinfektionsmittel verwendete Natriumhypochlorit wird in einem Spezialverfahren elektrolytisch, verdünnungstechnisch und/oder lösungstechnisch produziert, mit einem mineralischen Stabilisator aus NaCl, NaOH, NaHCO₃ versetzt und in einem pH-Bereich eingestellt, der ein Stoffgleichgewicht mit sich bringt. Dieses Natriumhypochlorit ist auch im Säugetier-Stoffwechsel als "endogenes Desinfektionsmittel" bekannt und wird dort in einem bestimmten Stoffzyklus von den neutrophilen Granulozyten hergestellt. Daher ist ein Verfahren außerhalb des Körpers, bei dem Natriumhypochlorit zur Keimreduktion eingesetzt wird, wesentlich verträglicher, nachhaltiger und gesundheitsmoralisch vertretbarer als jedes andere mit Desinfektionsmitteln, die zumeist Alkohol in höchster Konzentration, Aldehyde, Phenole oder ähnliche Gifte enthalten.

Bei der Fassadenbehandlung/Fassadenaufbereitung mit dem Desinfektionsmittel und der Bakterienlösung wurde im Kontext der endogenen Hygiene das ausgezeichnet funktionierende Modell des menschlichen Körpers als Vorlage genommen und dieses auf Anwendungsgebiete außerhalb des Körpers übertragen. Es wird somit ein natürlicher desinfizierender Wirkstoffkomplex zur Reduktion von pathogenen Keimen eingesetzt und anschließend die freigewordene Fläche / der befreite Raum mit probiotischen Keimen besiedelt, welche für den Mensch, Tier, Pflanze förderliche Eigenschaften besitzen und die erneute Ansiedlung mit pathogenen Keimen verhindern/reduzieren.

Die Fassadenaufbereitung mit dem Verfahren erfolgt in zwei Stufen. In der ersten Stufe wird die Fassadenfläche im Niederdruck mit 1 - 60 bar bei einer Temperatur von 20 - 45°C schonend abgespült. Je höher der Verschmutzungsgrad, desto höher der Druck in Korrelation mit der Temperatur. Das ablaufende Schmutzwasser wird für die weitere Verwendung und/oder Entsorgung aufgefangen und aufbereitet. Dabei wird sichergestellt, dass keine Algen, Pilze und Sporen in den Versickerungsbereich um das Haus gelangen.

Anschließend erfolgt das Auftragen der Natriumhypochloritlösung in Konzentrationen von 0,01 bis 25 % entsprechend des Verschmutzungsgrades der Fassade. Je höher die Verschmutzung, desto höher die NaOCl-Konzentration bzw. desto länger die Besprüh-Zeit mit niedriger dosiertem NaOCl. Dabei wird das ablaufende Schmutzwasser-NaOCI-Gemisch für die weitere Verwendung und/oder Entsorgung aufgefangen und aufbereitet. Die Einwirkzeit des Desinfektionsmittels liegt zwischen 5 Minuten und 24 h, bei durchschnittlicher Fassadenbeschmutzung jedoch 15 Minuten.

Im nächsten Schritt wird die Oberfläche mit Wasser im Niederdruckverfahren bei 1 - 60 bar und einer Temperatur von 20 - 45°C abgespült und das Abspülwasser für die weitere Verwendung und/oder Entsorgung aufgefangen.

In der zweiten Stufe wird die probiotische Lösung, die auch Bacillus subtilis enthält, im Niederdruckverfahren bei maximal 45°C zur Imprägnierung der Fassade mit dem Ziel, diese vor einem Neubefall mit Algen und Pilzen zu schützen, aufgetragen. Hierbei wird eine Konzentration von 10¹ - 10¹⁰ / ml Lösung verwendet, was von der zu erwartenden Neu-Belastung durch das Umfeld abhängig ist.

Gemäß einem Ausführungsbeispiel der Erfindung werden 100 l wässrige Natriumhypochloritlösung mit einer Konzentration von 0,06 Gewichtsprozent Natriumhypochlorit in der wässrigen Lösung durch Einleiten von Chlorgas in Natronlauge oder durch Elektrolyse einer Natriumchlorid-Lösung hergestellt. Dieser Natriumhypochloritlösung werden 15 g Natriumhydroxid und 5 g Natriumhydrogencarbonat zugesetzt.

In den folgenden Zeichnungen werden Anwendungsbeispiele des Desinfektionsmittels und des Verfahrens der Oberflächenbehandlung erklärt.

Es zeigen
- Fig.1: eine erfindungsgemäße Verwendung des Verfahrens in einer KFZ-Schleuse,
- Fig. 2: eine erfindungsgemäße Verwendung des Verfahrens in einer Tierschleuse,
- Fig. 3: Tabellen zur Wirkung des erfindungsgemäßen Desinfektionsmittels,
- Fig. 4: weitere Tabellen zur Wirkung des erfindungsgemäßen Desinfektionsmittels,
- Fig. 5: eine weitere Tabelle zur Wirkung des erfindungsgemäßen Desinfektionsmittels.

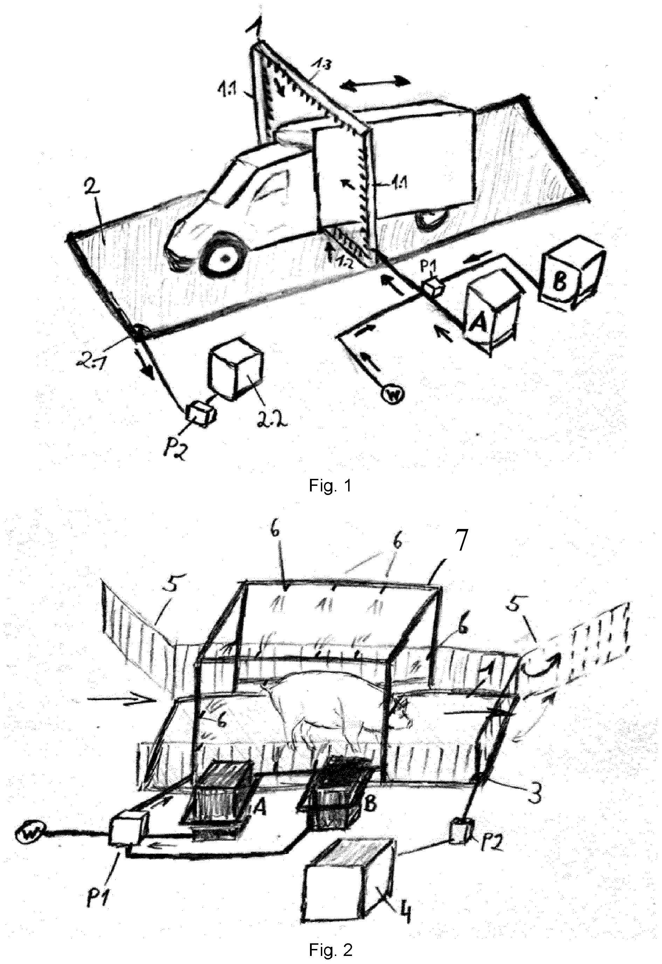

In Fig. 1 ist eine schematische Darstellung einer KFZ-Schleuse dargestellt. Insbesondere wird anhand der Zeichnung ein Verfahren zur Verhinderung der Einschleppung von ASF-Viren durch PKW, LKW, landwirtschaftliche Fahrzeuge, forstwirtschaftliche und militärische Fahrzeuge aufgezeigt. Die KFZ-Schleuse ist gekennzeichnet durch eine torartige Schleuse mit oder ohne Auffangwanne. Dieses Tor 1 hat die Form eines Rechtecks mit zwei Seitenteilen 1.1, einer Boden-Schwelle 1.2 und einer oben befindlichen Querstrebe 1.3 oder kann auch runde Form haben und ist mit Sprühdüsen ausgestattet. Beim Durchfahren des Tors wird Desinfektionsmittellösung durch diese Sprühdüsen vernetzend über das Fahrzeug gesprüht, wobei die Boden-Schwelle 1.2 dafür sorgt, dass auch der Unterbodenbereich sorgfältig behandelt / desinfiziert / imprägniert wird. Um zu verhindern, dass das abfließende Desinfektions- A und Imprägnier-Mittel B ins Erdreich/Grundwasser gelangt, ist eine flexible Kunstsfoff-Wanne 2 unter der sprühenden Boden-Schwelle mit einer Fläche, die einer LKW-Größe entspricht, angeordnet. So wird die herabfließende Desinfektionslösung aufgefangen und die Reifen werden auf diese Weise vollständig mit desinfiziert. Die Lösung kann durch einen Abfluss 2.1 und eine Pumpe P2 abgeleitet/abgesaugt und dem Entsorgungs-Zyklus 2.2 zugeführt werden.

Die Schleuse arbeitet mit mehreren Stufen, wobei diese Stufen je nach Bedarf auch einzeln geschaltet / genutzt werden können, um gezielte Maßnahmen ergreifen zu können. Der Ablauf der KFZ-Schleusen-Anwendung erfolgt in folgenden Stufen.

In der ersten Stufe wird die Desinfektionsmittellösung (stabilisierter NaOCl-Wirkstoffkomplex) in Behälter A durch Betätigung der Pumpe P1 in das mit Düsen besetzte Schleusentor gepumpt und dort über die Sprühdüsen mit einer Tröpfchengröße > 1 µ versprüht. Das von ASF zu befreiende Fahrzeug wird über die flexible Auffangwanne so langsam (0,1 - 5 km/h) durch das Schleusentor gefahren, dass alle Stellen des Fahrzeugs gleichmäßig mit Desinfektionsmittel benetzt werden.

Dieser Prozess kann bei Bedarf und sehr starker Verschmutzung mehrmals durch Vor- und Zurückfahren wiederholt werden. Entweder wird nach der vollständigen Benetzung des Fahrzeugs (Karosserie, Reifen, Unterboden) eine Wartezeit von 10 Minuten in der Schleuse eingehalten oder das Fahrzeug fährt bei laufender Stufe 1 mindestens 10 Minuten mit < 5 km/h in der Schleuse vor und zurück, ohne dass die Reifen die flexible Auffangwanne verlassen. Jedenfalls werden 10 Minuten Einwirkzeit für das Desinfektionsmittel vorausgesetzt. Das Fahrzeug ist nun desinfiziert und kann je nach Bedarf entweder die Schleuse verlassen oder durch die weiteren Stufen so behandelt werden, dass einer erneuten Kontamination entgegengewirkt wird. Das in der flexiblen Auffangwanne befindliche Abwasser wird durch Betätigung der Pumpe P2 abgesaugt und in den Entsorgungsbehälter 2.2 gepumpt. Die hier eingesetzte Desinfektionsmittellösung (stabilisierte NaOCl-Lösung) kann in Konzentrationen von 0,1 bis > 600ppm angewandt werden. Es wird dringend empfohlen, nach der Desinfektionsmittellösung eine Spülung der Anlage durch W mit klarem Wasser vorzunehmen, um die Materialien zu schonen.

Nach der im letzten Absatz genannten Einwirkzeit von 10 Minuten wird durch Umschalten der Pumpe auf W das Fahrzeug mit klarem Wasser gespült, wobei das Fahrzeug mit einer Geschwindigkeit von 0,1 - < 5 km/h in der Schleuse so vorwärts und rückwärts fährt, dass das klare Spülwasser vernetzend über das Fahrzeug läuft. Dabei sollte das Fahrzeug mindestens einmal vorwärts und rückwärts gefahren sein, ohne dass die Reifen die flexible Auffangwanne verlassen. Sobald das Fahrzeug gespült (und vorher desinfiziert) wurde kann es entweder die Schleuse nach vorne hin verlassen oder mit probiotischer Lösung weiter behandelt werden.

Sobald das Fahrzeug gespült wurde und weiter mit probiotischer Lösung zur Imprägnierung mit probiotischen Bakterien behandelt werden soll, wird durch Betätigung der Pumpe P1 auf den Zulauf aus dem Behälter B umgestellt, so dass die Lösung mit probiotischen Bakterien über das Sprühsystem des Schleusentors vernetzend auf allen äußeren Teilen des Fahrzeugs verteilt wird. Dabei fährt das Fahrzeug mit einer Geschwindigkeit von 0,1 - < 5 km/h in der Schleuse so vorwärts und rückwärts, dass die Reifen die Schleuse nicht verlassen. Sobald das Fahrzeug vernetzend mit der probiotischen Lösung imprägniert wurde, kann das Fahrzeug die Schleuse verlassen. Das Fahrzeug sollte in der Schleuse nicht erneut mit klarem Wasser gespült werde. Die hier eingesetzte Konzentration der probiotischen Lösung sollte je nach Bedarf und gewünschter Stärke der Imprägnierung eine Konzentration von 10¹ bis > 10¹⁰ KbE aufweisen. Nach dieser Stufe und dem Verlassen des Fahrzeugs sollte die Schleusenanlage erneut mit klarem Wasser der Stufe W gespült werden und das in der flexiblen Auffangwanne befindliche Abwasser der Entsorgungsanlage 2.1 über den Ablauf 2.2 und durch die Pumpe P2 zugeführt werden.

Durch diese Behandlung wird das Fahrzeug zunächst von allen Keimen befreit. Dann wird nach der Desinfektion das übrige eventuell noch auf dem Fahrzeug befindliche Desinfektionsmittel durch das Spülwasser abgewaschen und schließlich wird das Fahrzeug mit einer gezielten Imprägnierung durch probiotische Bakterien so imprägniert, dass eine erneute Kontamination mit pathogenen Keimen verhindert wird. Solche KFZ-Schleusen können an Grenzen, vor landwirtschaftlichen Betrieben oder anderen von der ASF-Seuche betroffenen Hot-Spots aufgestellt und betrieben werden, um die Ausbreitung der ASF-Seuche zu verhindern.

In Fig.2 ist eine schematische Darstellung einer Tierschleuse gezeigt. Werden Tiere in die Stallungen neu eingebracht oder sollen die Stallungen verlassen, durchlaufen die Tiere eine speziell für diesen Zweck geschaffene Schleuse. Hierbei befindet sich auf dem Boden eine flexible Kunststoff-Wanne 1, welche von den Tieren durchwatet wird und über den Tieren eine Sprüh-Vorrichtung 7, welche die Tiere vernetzend mit Desinfektionsmittellösung besprüht. Die Wanne hat eine Ablauf-/Absaug-Vorrichtung 3, welche ermöglicht, dass permanent verbrauchtes Material abgelassen und der Entsorgung 4 zugeführt wird, während durch die Sprühvorrichtung permanent neue Desinfektionsmittellösung eingetragen wird.

Das Verfahren kann in mehreren Stufen und/oder einstufig durchgeführt werden. Dabei wird das Tier wird in die Schleuse geführt, die bei Bedarf mit einer Gatter-Funktion 5 ausgestattet werden kann. Durch Betätigen der Pumpe P1 in Kombination mit dem Desinfektionsmittel (stabilisierte NaOCl-Lösung) wird die Schleuse als Desinfektionsstufe gestartet. Das Tier wird über die Düsen 6 mit dem Desinfektionsmittel in der bedarfsgerechten Konzentration besprüht und watet durch diese desinfizierende Lösung. Entweder kann das Tier nach dem Besprühen mit Desinfektionsmittel und dem Durchwaten der Desinfektionslösung weiter verbracht oder durch die folgenden Stufen einer weiteren Behandlung unterzogen werden. Soll das Tier direkt weiter verbracht werden, verbleibt die Desinfektionsmittellösung zur Trocknung ohne Spülvorgang auf dem Tier und das Tier kann nach einem langsamen Durchwaten der Schleuse dieselbe verlassen. Nach Beenden der ersten Stufe kann das Abwasser über die Ablauf/Absaug-Vorrichtung 3 und Betätigen der Pumpe P2 in den Abwasserbehälter 4 geleitet werden, um der Entsorgung zugeführt zu werden.

Für eine weitere Behandlung (oder einfache Reinigung von Schmutz und/oder Abspülen von Desinfektionsmittel) kann das Tier durch Betätigung der Pumpe P1 in Kombination mit der Spülwasser-Zufuhr W abgespült werden.

Erst nach dem Spülvorgang kann/soll durch Betätigung von P1 in Kombination mit der probiotischen Lösung B die Imprägnierung der Tiere mit Probiotika durchgeführt werden. Diese probiotische Lösung schützt die Tiere durch die besonderen positiven Eigenschaften der ausgewählten Bakterien vor einer Infektion / Befall durch pathogene Keime. Es wird quasi eine mikrobielle Verteidigungslinie auf der Haut/Fell und den Hufen/Klauen/Pfoten aufgetragen, um das Tier vor pathogenen Keimen zu schützen. Dies kann für den Transport durch kontaminierte Gebiete oder bei der Verbringung in möglicherweise belastete Lokalitäten von großem Nutzen sein. Es wird hierbei eine probiotische Lösung mit einer Konzentration von 10¹ bis > 10¹⁰ KbE aufgebracht. Nach der Behandlung / Stufe wird das in der flexiblen Auffangwanne befindliche Abwasser der Entsorgung 4 zugeführt.

Da es sich bei der Desinfektionsmittellösung nicht um einen Gefahrstoff handelt und das Mittel hautverträglich ist, wird das Mittel von den Tieren ausgezeichnet vertragen und hilft sogar bei leichten Hautverletzungen dabei, den Heilungsprozess zu beschleunigen, weil es sich bei der Desinfektionsmittellösung um einen Wirkstoffkomplex handelt, der dem Säugetier-Immunsystem nachempfunden ist. Die in der probiotischen Lösung befindlichen Mikroorganismen sind typischerweise Bestandteile des natürlichen Hautschutz-Mikrobiom-Systems von Säugetieren und nehmen den Raum nachhaltig ein, der ansonsten von pathogenen Keimen besetzt werden könnte.

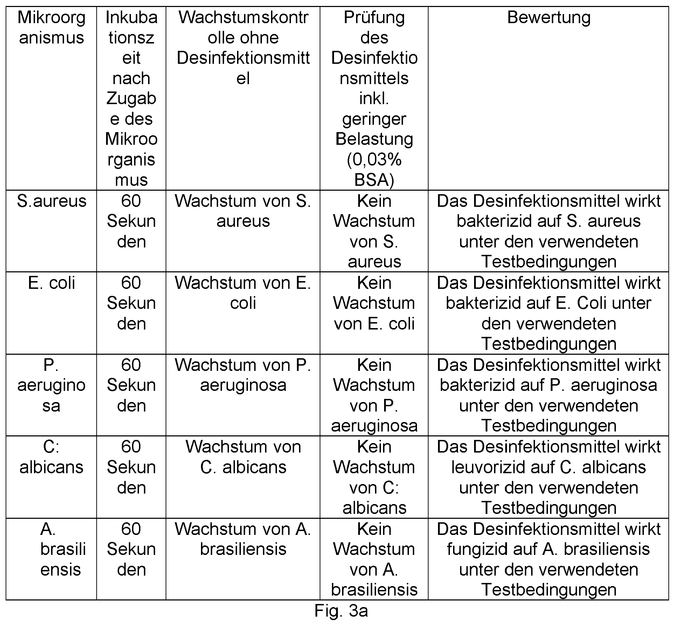

In Fig. 3a ist eine Tabelle zur bakteriziden, leuvoriziden und fungiziden Wirkung des Desinfektionsmittels dargestellt. Dabei wurde die Wirkung des Desinfektionsmittels mit einer Konzentration von 0,06 Gewichtsprozent Natriumhypochlorit, sowie im Verdünnungsverhältnis 1:100 im qualitativen Suspensionsversuch in Anlehnung an die Standardmethoden VAH zur Prüfung chemischer Desinfektionsverfahren gemäß Kapitel 8 geprüft. Dabei betrug die Prüftemperatur 20°C bis 25°C und die Inkubationstemperatur 37°C bzw. 30°C für A. brasiliensis.

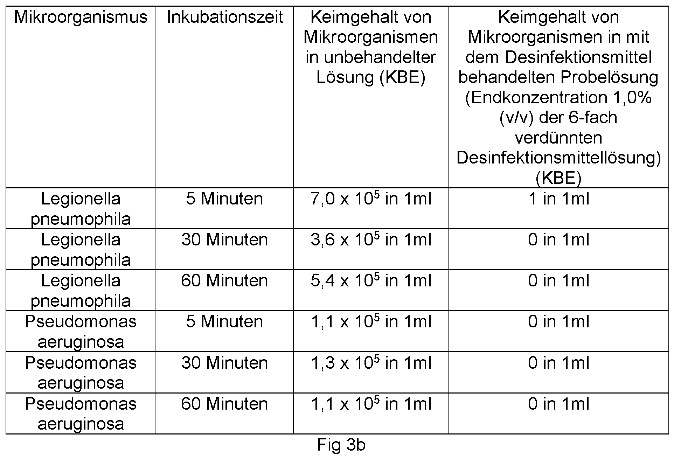

In Fig. 3b ist die Wirkung des Desinfektionsmittels dargestellt. Zwei Ansätze mit je 98 ml sterilem Wasser wurden mit je 1 ml des Mikroorganismus kontaminiert. Ein Ansatz wurde nun mit 1 ml des 6-fach verdünnten Desinfektionsmittels (0,06% Natriumhypochlorit) versetzt, während der andere mit 1 ml sterilem deionisiertem Wasser auf 100 ml aufgefüllt wurde. Dieser unbehandelte Ansatz dient als Kontrolle für die Lebensfähigkeit des Mikroorganismus über den Versuchszeitraum. Zu den angegebenen Zeiten wurde jeweils der Keimgehalt der beiden Ansätze bestimmt.

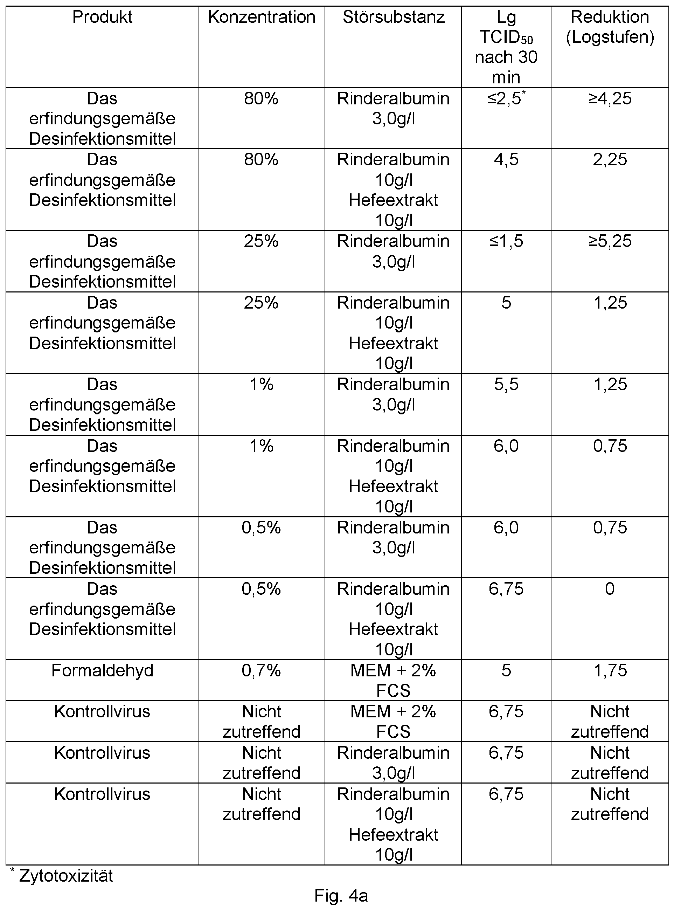

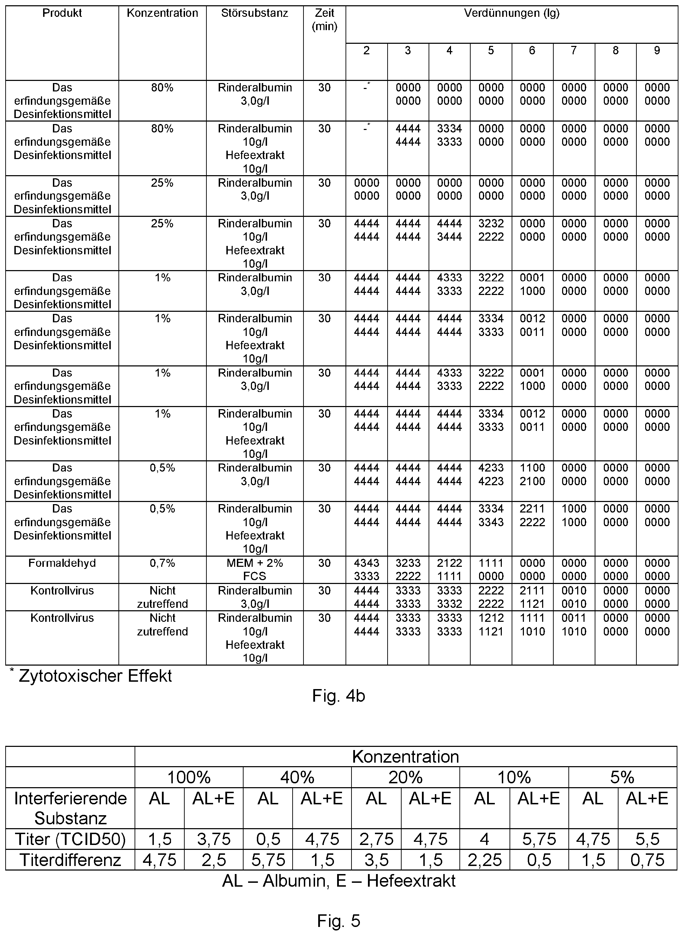

In Fig. 4 ist die Wirkung des Desinfektionsmittels gegen den ASF / Afrikanischer Schweinepest Virus (BA71V Genotyp 1) dargestellt. Hierbei zeigt sich, dass das Desinfektionsmittel mit einer Konzentration von 0,06 Gewichtsprozent Natriumhypochlorit den BA71V Genotyp 1 mit voller Wirksamkeit nach bereits 3 Minuten abtötet. Eine Einwirkzeit des Desinfektionsmittels von 10 Minuten wird empfohlen. Zur Prüfung der Wirksamkeit des Desinfektionsmittels gegen den Schweinepestvirus, wurden Verdünnungsreihen mit 80%, 25%, 1% und 0,5% Desinfektionsmittellösung gehandhabt. Die Tabellen zeigen die Verläufe der Keimreduktionen bei entsprechenden Verdünnungen/Konzentrationen Desinfektionsmittels in Relation zu standardisierten biologischen Verschmutzungsgraden.

In Fig. 5 ist die Wirkung des Desinfektionsmittels gegen ASF-Viren gezeigt. Das Desinfektionsmittel ist in verschiedenen Konzentrationen getestet worden. Das Desinfektionsmittel ist im harten Wasser aufgelöst worden. Jede getestete Konzentration ist der Wirkung von interferierender Substanzen unterzogen worden: einer en bovines Albumin (AL) enthaltenden Lösung sowie einer eine Mischung von bovinen Albumin sowie eines Hefeextraktes enthaltenden Lösung (AL+E). In die Mischung der Substanzen ist ein Virus - bovines Enterovirus des Typs I hinzugeführt worden, danach ist die Substanzenmischung auf eine Sensorkarte für die Titration, auf der Nährflüssigkeit MEM mit 2% bovinen Albumin enthalten war, aufgetragen und entsprechende fortlaufende Verdünnungen durchgeführt worden. In jede die Mischung des Desinfektionsmittels, der Nährflüssigkeit, des Virus sowie interferierender Substanzen enthaltende Grube ist die Suspension der MDBK-Zellen (Rindernieren-Epithelzellen), die eine Vermehrung des Virus ermöglichten, eingeführt worden. Gleichzeitig ist eine Kontrolle des Virus durchgeführt worden, die in der Übertragung der entsprechenden Verdünnungen des Virus in die Gruben auf der Sensorkarte für die Titration ohne Anwesenheit des Desinfektionsmittels, bestand. Das Ablesen der Ergebnisse ist nach dem 3. Tag erfolgt. Der Bewertung unterlag das Auftreten des cytopathischen Effekts (CPE) in jeder Grube der Sensorkarte. Auf der Grundlage der CPE-Ablesung ist der Titer des Virus unter Verwendung des TCID50 (des Titers des Virus bewertet auf der Grundlage von 50% des cytopathischen Effekts). Es ist die Differenz zwischen dem Titer des Virus in der Kontrolle und dem Titer des Virus mit Zugabe des Desinfektionsmittels in den entsprechenden Konzentrationen berechnet worden. Parallel zu den Tests ist eine Kontrolle des Wachstums der Zellen der MDBK-Zellen auf jeder der untersuchten Sensorkarten sowie die Kontrolle des Einflusses des Desinfektionsmittels ohne Zugabe der interferierenden Substanzen auf die Zellen der MDBK-Linie durchgeführt worden. Als viruziden Effekt wir die Absenkung der Menge des Titers des Virus um etwa 4 log₁₀ im Verhältnis zum Anfangstiter erachtet. Der Titer des Virus in der Kontrolle des Virus (TCID50) betrug 6,25 log₁₀.

## Patentansprüche

1. Desinfektionsmittel in Gestalt einer wässrigen, Natriumhypochlorit in einer Konzentration von 0,0001 Gewichtsprozent bis 25 Gewichtsprozent enthaltenden Lösung, **dadurch gekennzeichnet, dass** das Desinfektionsmittel zur Stabilisierung des Natriumhypochlorits zusätzlich Natriumhydrogencarbonat in einer Konzentration zwischen 0,0001 Gewichtsprozent und 0,5 Gewichtsprozent, Natriumhydroxid in einer Konzentration zwischen 0,0001 Gewichtsprozent und 0,5 Gewichtsprozent und Natriumchlorid in einer Konzentration zwischen 0,0001 Gewichtsprozent und 0,5 Gewichtsprozent enthält.

2. Desinfektionsmittel nach Anspruch 1, **dadurch gekennzeichnet, dass** die wässrige Lösung zur Stabilisierung des Natriumhypochlorits zusätzlich Natriumhydrogencarbonat in einer Konzentration zwischen 0,001 Gewichtsprozent und 0,4 Gewichtsprozent, Natriumhydroxid in einer Konzentration zwischen 0,001 Gewichtsprozent und 0,4 Gewichtsprozent und Natriumchlorid in einer Konzentration zwischen 0,001 Gewichtsprozent und 0,4 Gewichtsprozent enthält.

3. Desinfektionsmittel nach Anspruch 1 oder 2, **dadurch gekennzeichnet, dass** der pH-Bereich der wässrigen Lösung zwischen pH7 und pH10 liegt und das Desinfektionsmittel einen Redoxwert von > 700mV besitzt.

4. Verwendung eines Desinfektionsmittels nach einem der vorhergehenden Ansprüche zum Zerstören einzelliger Organismen.

5. Verwendung eines Desinfektionsmittels nach Anspruch 4, **dadurch gekennzeichnet, dass** die einzelligen Organismen ASF-Viren oder Coronaviren sind.

6. Verwendung eines Desinfektionsmittels nach einem der vorangegangenen Ansprüche, **dadurch gekennzeichnet, dass** das Desinfektionsmittel in Schleusen aufgebracht wird.

7. Verfahren zur Oberflächenbehandlung mit einem Desinfektionsmittel nach einem der Ansprüche 1 bis 3, **dadurch gekennzeichnet, dass**
• in einer ersten Stufe das Desinfektionsmittel durch Fluten, Auftragen, Versprühen oder Vernebeln auf die zu behandelnden Oberflächen aufgetragen wird bzw. durch Versprühen/Verneblung in die Raumluft eingebracht wird,
• das Desinfektionsmittel vollständig abreagiert,
• in einer zweiten Stufe ein Mikroorganismus zum nachhaltigen Besetzen der zu behandelten Oberflächen auf die zu behandelten Oberflächen aufgetragen wird.

8. Verfahren nach Anspruch 7, **dadurch gekennzeichnet, dass** der Mikroorganismus der Bacillus subtilis ist.

9. Verwendung des Verfahrens nach Anspruch 7 oder 8 zur Desinfektion und Oberflächenbehandlung in der Landwirtschaft und der Viehzucht.

10. Verwendung des Verfahrens nach Anspruch 7 oder 8 zur Desinfektion und Oberflächenbehandlung in der Industrie.

11. Verwendung des Verfahrens nach Anspruch 7 oder 8 zur Desinfektion und Oberflächenbehandlung in der Medizin.

12. Verwendung des Verfahrens nach Anspruch 7 oder 8 zur Desinfektion und Oberflächenbehandlung in öffentlichen Einrichtungen.

13. Verwendung des Verfahrens nach Anspruch 6 oder 7 zur Desinfektion und Oberflächenbehandlung in Sporteinrichtungen.

14. Verwendung des Verfahrens nach Anspruch 7 oder 8 zur Desinfektion und Oberflächenbehandlung in Saunen und Wellness-Anlagen.

15. Verwendung des Verfahrens nach Anspruch 7 oder 8 zur Desinfektion und Oberflächenbehandlung in der Fassadenaufbereitung.
